# EUROPEAN PATENT SPECIFICATION

(11) **EP 2 724 896 B1**
(45) Date of publication and mention of the grant of the patent: **01.03.2017**
(21) Application number: 12804158.9
(22) Date of filing: 14.06.2012
(51) Int. Cl.: B60R 21/00, G06T 1/00, G08G 1/16, G06T 19/00, H04N 7/18, B60R 1/00, B62D 15/02, G03B 37/04, G06T 3/40, G08G 1/14

(54) **PARKING ASSISTANCE DEVICE**
PARKHILFEVORRICHTUNG
DISPOSITIF D'AIDE AU STATIONNEMENT

(30) Priority: 27.06.2011 JP 2011141442
(43) Date of publication of application: 30.04.2014
(73) Proprietor: Clarion Co., Ltd., Saitama-shi, Saitama 330-0081 (JP)
(72) Inventor: OKUYAMA, Yoshitaka, Saitama-shi Saitama 330-0081 (JP)
(74) Representative: Kramer Barske Schmidtchen Patentanwälte PartG mbB
(86) International application number: PCT/JP2012/065221
(87) International publication number: WO 2013/002037

(56) References cited:
- EP-A1- 1 179 958
- EP-A1- 1 355 285
- EP-A1- 2 207 350
- EP-A1- 2 234 399
- JP-A- 2007 183 877
- JP-A- 2008 213 647
- JP-A- 2010 081 385

## Description

### Technical Field

The present invention relates to a parking assistance system capable of performing driving assistance for a driver who performs a parking operation by displaying an area surrounding a parking position of a vehicle using an overhead view video (overhead view image).

### Background Art

There has been conventionally proposed a system that takes images of an area surrounding a vehicle using a plurality of cameras mounted to the vehicle and generates, based on the taken images, a video (hereinafter, referred to as "overhead view video") virtually overlooking the vehicle from above, thereby providing conditions of the area surrounding the vehicle to a user as a video (image) (see, for example, Patent Literature 1).

Providing the conditions of the area surrounding the vehicle allows the user to grasp a positional relationship among the vehicle, a parking space, and surrounding objects based on the video virtually overlooking the area surrounding the vehicle from above, and thus to intuitively grasp conditions of the vehicle.

However, in the system disclosed in Patent Literature 1, the vehicle is fixed in position to a center of the overhead view video. Therefore, when the vehicle is moved, surrounding appearance changes with the vehicle being fixed to the center of the overhead view video.

Thus, when the wheel is cut in the parking operation, a display position of the parking space may be significantly moved in response to the cut of the wheel, or the parking space may go outside the coverage of the overhead view video to disappear therefrom.

In order to solve this problem, a system is proposed, in which the vehicle is not fixed to the center of the overhead view video, but, in the parking operation, an image of the vehicle superimposed on the overhead view image is moved with at least the parking space being displayed on a predetermined position of a screen (see, for example, Patent Literature 2).

In the method disclosed in Patent Literature 2, the overhead view image is generated based on the video taken immediately before the parking operation. After the parking operation is started, an overhead view video is generated, in which a display position of a vehicle CG (computer graphics) superimposed on the overhead view image is moved to a position corresponding to a travel direction and a travel amount of the vehicle without update of the overhead view image, and provided to the user.

In the method of Patent Literature 2, the overhead view image surrounding the vehicle in the overhead view video is not moved with the movement of the vehicle, but the position of the vehicle CG is moved. This can prevent the display position of the parking space from being significantly changed and prevent the parking space from disappearing from a screen.

### Citation List

### Patent Literature

Patent Literature 1: Jpn. Pat. Appln. Laid-Open Publication No. 2001-339716
Patent Literature 2: Jpn. Pat. Appln. Laid-Open Publication No. 2007-183877

EP 2 234 399 A1 is considered as the closest prior art and relates to an image processing method that processes a surrounding monitoring image for monitoring surroundings of a vehicle using image data captured by multiple cameras that are carried by the vehicle. The image processing method can be used for supporting the driver's operation at the parking of a vehicle into a parking space and the starting of the vehicle from the parking space by using a viewing information table containing a viewing direction field, a viewing target field, a viewing distance field and an angle-off-view field, wherein the viewing target field stores information of the viewing target at a center of the observation of a viewing point, so that a driver outside a vehicle sees the parking space and approaches the vehicle to get in, wherein the view point and viewing direction in a start-point viewing information can be set so that the scene a driver approaching the parking space can be reproduced with the viewpoint at an open side of the parking space and the viewing direction toward the inside of the parking space from the viewpoint.

EP 1 179 958 A1 relates to an image processing technique for a monitoring system that can be used as an aid to confirm safety when driving a vehicle.

JP 2007-183877 A relates to a driving support device for a vehicle for supporting driving operation of a driver by displaying a bird's eye video.

EP 2 207 350 A1 relates to a parking assistant method providing a driver with an image which denotes a vehicle surrounding state.

EP 1 355 285 A1 relates to an image display apparatus for an automotive vehicle which is capable of displaying the vehicle and the surrounding of the vehicle viewed from an upper sky through a looking down angle that the vehicle driver desires.

### Summary of Invention

### Technical Problem

However, when the overhead view image is fixed in the method of Patent Literature 2, the overhead view image is not updated until completion of the parking operation of the vehicle. Thus, if someone or something enters the display area in the course of the parking operation, he or she or it is not displayed. This requires a user performing the parking operation to confirm the safety by paying attention, with his or her eyes, to surrounding conditions in addition to the overhead view image displayed on a screen. This makes the parking operation complicated, which may, in turn, make safety assurance difficult.

Meanwhile, Patent Literature 2 proposes a method other than one that uses the fixed overhead view image in generating the overhead view video. That is, the method uses a conversion algorithm that dynamically changes with the movement of the vehicle, for example, a conversion equation using a parameter whose value changes in accordance with a movement direction or a movement amount of the vehicle to generate a special overhead view video (vehicle-surrounding video) in which even if the vehicle is moved, the display position of the parking space on a screen is not moved.

However, when the special overhead view video is generated in real time using the conversion algorithm, a method (e.g., a method that rearranges, to a predetermined display position, pixels of the video taken by each on-vehicle camera according to a previously prepared pixel conversion table) similar to the method for generating a general overhead view video (e.g., the above-motioned overhead view image) cannot be used. Thus, there occurs a necessity of performing video update processing (conversion processing to overhead view video) in real time. However, a delay or the like occurs in the video update processing unless a system allowing sophisticated video conversion processing is used, making it difficult to obtain a desired video.

An enormous cost is required to achieve image arithmetic processing using a sophisticated video conversion system, so that it is difficult to mount such a system on the vehicle.

Further, when a sophisticated video conversion system is used to depict in real time the overhead view video in which the display position of the parking space is fixed, a shooting range of each camera changes with the movement of the vehicle. Thus, it is difficult to perform in real time joint processing for a joint portion of camera videos at a time of generation of the overhead view video.

For example, the overhead view video is generated with the vehicle fixed to the center of the video, the joint portion between the videos of two cameras on a screen does not change. Accordingly, no problem occurs even when the rearrangement of the pixels is performed using a pixel conversion table. However, when the overhead view video in which the display position of the parking space is fixed is depicted in real time, a given specific point is moved from a shooting range of one camera to that of another with the movement of the vehicle. Thus, when a point that may move from the shooting range of one camera to that of another is reproduced on the overhead view video, it is very difficult to determine which sources (camera videos) are to be used. Thus, realistically, it is difficult to generate in real time the overhead view video in which the display position of the parking space is fixed.

The present invention has been made in view of the above problems, and an object thereof is to provide a parking assistance system capable of, without using a sophisticated video conversion system, providing in real time, to a user, an overhead view video in which the display position of the parking space is kept displayed on a display screen even if the vehicle is moved.

### Solution to Problem

According to an aspect of the present invention, a parking assistance system includes: a first overhead view video generation section that generates, based on camera videos shot by a plurality of cameras mounted to a vehicle, a first overhead view video virtually overlooking, from above the vehicle, conditions surrounding the vehicle with the vehicle located at a center therein; a parking target position detection section that detects a parking target position for parking the vehicle from the first overhead view video; a viewpoint position determination section that determines a viewpoint position based on a positional relationship between the parking target position detected by the parking target position detection section and a vehicle position in the first overhead view video; a rotation amount determination section that determines a rotation amount in the first overhead view video based on the positional relationship between the parking target position and vehicle position in the first overhead view video; a viewpoint conversion table creation section that creates a viewpoint conversion table for moving a center position of the first overhead view video to the viewpoint position determined by the viewpoint position determination section and rotating the first overhead view video with respect to the viewpoint position as a rotation center by the rotation amount determined by the rotation amount determination section; and a second overhead view video generation section that applies video conversion processing to the first overhead view video based on the viewpoint conversion table created by the viewpoint conversion table creation section to generate a second overhead view video in which the viewpoint position is located at a center thereof and which is obtained by rotating the first overhead view video by the rotation amount determined by the rotation amount determination section.

In the parking assistance system according to the present invention, conversion is applied to the first overhead view video, as a base video, generated by the first overhead view video generation section using the viewpoint conversion table created by the viewpoint conversion table creation section to thereby generate the second overhead view video in which the viewpoint position and horizontal and vertical directions (rotation amount) are changed. In the parking assistance system according to the present invention, generation processing of the second overhead view video can be easily achieved using the viewpoint conversion table, thereby allowing a desired overhead view video to be generated in real time.

Further, the second overhead view video is generated from the first overhead view video using the viewpoint conversion table, so that previous application of processing to the boundary portion between the camera videos at the time of generation of the first overhead view video by the first overhead view video generation section eliminates the need for the second overhead view video generation section to apply the processing once again to the boundary portion. This reduces a processing load in the processing of the boundary portion, making it easy to generate the second overhead view video in real time.

Further, the real time generation of the second overhead view video allows, if someone comes close to a display range of the overhead view video during parking operation, existence of him or her to be displayed in the overhead view video. Thus, the user of the vehicle can grasp in real time the surrounding conditions through the second overhead view video, thereby enhancing safety during the parking operation.

The viewpoint conversion table is a table used only for moving the first overhead view video in the horizontal and vertical directions based on the viewpoint position determined by the viewpoint position determination section and rotating the first overhead view video based on the rotation amount determined by the rotation amount determination section. Thus, the viewpoint conversion table generation section can easily generate the viewpoint conversion table, allowing reduction in a processing load thereon. This allows the generation processing of the second overhead view video to be performed rapidly, thereby preventing a delay in the second overhead view video generation processing.

The second overhead view video is easily generated from the first overhead view video using the viewpoint conversion table, and the viewpoint conversion table is a table for applying simple processing of only horizontally and vertically moving the first overhead view video and rotating the first overhead view video. Thus, it is not necessary to use a sophisticated conversion algorithm for the generation of the second overhead view video. Thus, a sophisticated arithmetic processing system is not required for the generation of the second overhead view video, thereby saving processing cost.

The viewpoint position to be determined by the viewpoint position determination section is determined based on a positional relationship between the parking target position detected by the parking target position detection section and vehicle position in the first overhead view video. Thus, the second overhead view video is not an overhead view video in which the vehicle is located at the center like the conventional overhead view video (first overhead view video) but an overhead view video in which the viewpoint position considering the positional relationship between the parking target position and vehicle position is located at the center. Thus, it is possible to prevent the parking target position from disappearing from the overhead view video due to the cut of wheel.

Further, the rotation amount of the first overhead view video is determined by the rotation amount determination section, and video horizontal/vertical direction conversion processing is applied to the second overhead view video based on the rotation amount. Thus, it is possible to change a direction of the screen in accordance with a direction of the parking target position with respect to the vehicle position. This allows the display direction of the screen during the parking operation to be more appropriate to actual conditions of the parking operation.

### Advantageous Effects of Invention

According to the parking assistance system according to the present invention, conversion is applied to the first overhead view video, as a base video, generated by the first overhead view video generation section using the viewpoint conversion table created by the viewpoint conversion table creation section to thereby generate the second overhead view video in which the viewpoint position and horizontal and vertical directions (rotation amount) are changed. In the parking assistance system according to the present invention, generation processing of the second overhead view video can be easily achieved using the viewpoint conversion table, thereby allowing a desired overhead view video to be generated in real time.

### Brief Description of Drawings

FIG. 1 is a block diagram illustrating an example of a schematic hardware configuration of a car navigation system according to an embodiment of the present invention.
FIG. 2 is a view illustrating an example of mounting positions of on-vehicle cameras according to the embodiment of the present invention.
FIG. 3 is a block diagram illustrating an example of a schematic configuration of functional blocks in the car navigation system according to the embodiment of the present invention.
FIG. 4 is a view exemplifying an overall overhead view video (overhead view image) according to the present embodiment which is generated based on camera videos and an image range of the overhead view video (overhead view image) extracted based on table data.
FIGS. 5(a) and 5(b) are each an overhead view video (overhead view image) in which a viewpoint position is exemplified, in which FIG. 5(a) illustrates the overhead view video (overhead view image) when the viewpoint position is set to an intermediate position between a vehicle position and a parking target position, and FIG. 5(b) illustrates the overhead view video (overhead view image) when the viewpoint position is set to the parking target position.
FIG. 6(a) illustrates an example of the overhead view video (overhead view image) before application of rotation processing, and FIG. 6(b) illustrates the overhead view video (overhead view image) after application of the rotation processing.
FIG. 7 is a flowchart illustrating viewpoint conversion processing of the overhead view video (overhead view image) to be performed in a controller according to the embodiment of the present invention.

### Description of Embodiments

A car navigation system, which is an example of a parking assistance system according to the present invention is presented hereinafter and described in detail with reference to the accompanying drawings.

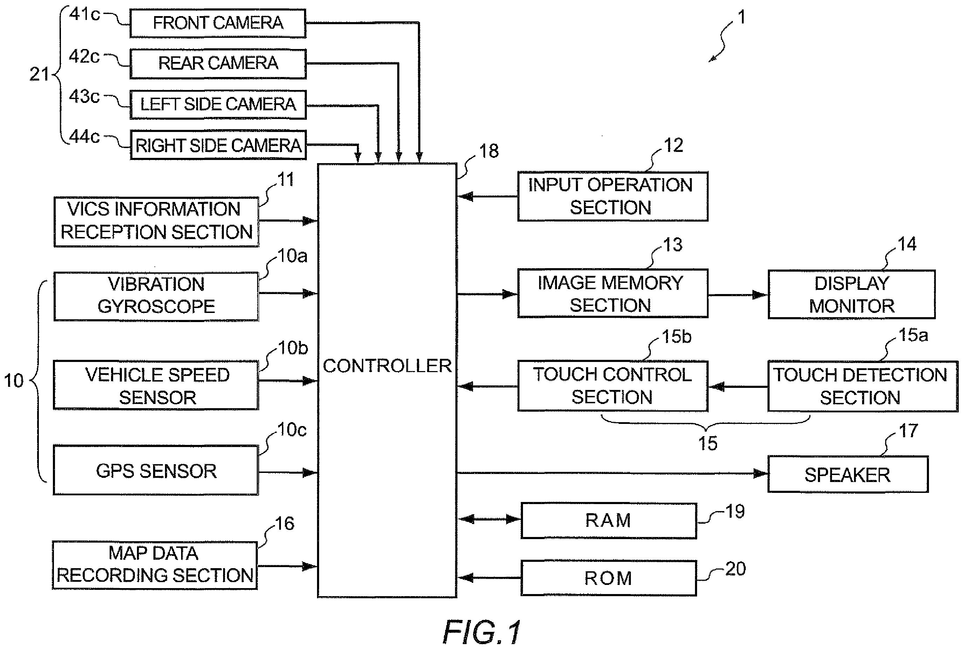

FIG. 1 is a block diagram illustrating an example of a schematic hardware configuration of a car navigation system 1. As illustrated in FIG. 1, the car navigation system 1 includes a current position detection section 10, a VICS (Vehicle Information and Communication System@) information reception section 11, an input operation section 12, an image memory section 13, a display monitor (display section) 14, a touch panel section (input section) 15, a map data recording section (viewpoint conversion table recording section) 16, a speaker 17, a controller (first overhead view video generation section, parking target position detection section, viewpoint position determination section, rotation amount determination section, viewpoint conversion table creation section, second overhead view video generation section) 18, a RAM (Random Access Memory: viewpoint conversion table recording section) 19, a ROM (Read Only Memory) 20, and cameras 21.

The current position detection section 10 has a role of detecting a current position of a vehicle on which the car navigation system 1 is mounted. The current position detection section 10 includes a vibration gyroscope 10a, a vehicle speed sensor 10b, and a GPS (Global Positioning System) sensor 10c. The vibration gyroscope 10a has a function of detecting a travel direction (orientation of travel direction). The vehicle speed sensor 10b detects a pulse which is output, in accordance with a travel distance of the vehicle, from a pulse generator installed in the vehicle, thereby detecting a vehicle speed. The GPS sensor 10c has a role of detecting a GPS signal from a GPS satellite. The controller 18 uses the received GPS signal to allow detection of the current position of the vehicle based on a coordinate position (for example, latitude/longitude information based on World Geodetic System (WGS84)).

The VICS information reception section 11 has a role of receiving VICS information. The VICS information is information supplied from a VICS information center (not illustrated) and indicates the latest road conditions such as traffic jam information. The VICS information reception section 11 receives the VICS information supplied by a radio wave beacon, an optical beacon, and FM multiplex broadcasting to thereby reliably acquire traffic information. The VICS information received by the VICS information reception section 11 is output to the controller 18.

The input operation section 12 is used for performing various operations in the car navigation system 1 with an operation method other than a touch operation using the touch panel section 15. Specifically, physical components, such as a switch, a button, and a remote controller mounted to a casing of the car navigation system 1 correspond to the input operation section 12.

The image memory section 13 has a role of temporarily storing image data to be displayed on the display monitor 14. The image data is generated as needed by the controller 18 by extracting map data from the map data recording section 16 based on current position information of the vehicle acquired by the current position detection section 10 or destination information set by a user and synthesizing various image information.

The controller 18 makes the image memory section 13 record the generated image data. The image data recorded in the image memory section 13 are sequentially displayed as a map, etc., on the display monitor 14 of the car navigation system 1. The sequential display of the image data recorded in the image memory section 13 on the display monitor 14 allows a video (e.g., overhead view video based on overhead view images) based on the image data to be displayed in real time on the display monitor 14.

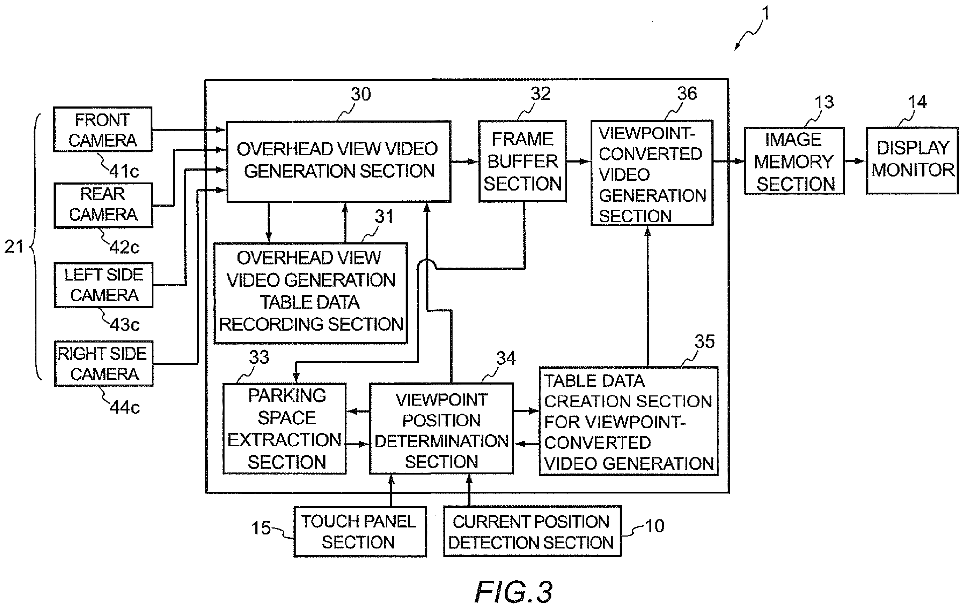

The image memory section 13 has another role of recording an overhead view video generated by an overhead view video generation section 30 (to be described later; see FIG. 3) or a viewpoint-converted video generated by a viewpoint-converted video generation section 36 (to be described later) so as to allow the video to be displayed on the display monitor 14. Details of the overhead view video generation section 30 and viewpoint-converted video generation section 36 will be described later.

The display monitor 14 has a role of displaying various information such as a road map of an area where the vehicle exists based on the various information such as the map data. Specifically, a liquid crystal monitor, a CRT monitor, or the like can be used as the display monitor 14. Further, the display monitor 14 can display, when the user performs an operation (hereinafter, referred to as "parking operation") for parking his or her car in a parking area, conditions surrounding the vehicle as a video (overhead view video) virtually overlooking the vehicle or parking space from above. Processing of displaying the overhead view video on the display monitor 14 will be described later.

The touch panel section 15 has a role of determining whether or not the user has touched a surface of the display monitor 14 with his or her finger and then determining user's input processing based on a touched position. The touch panel section 15 includes a touch detection section 15a and a touch control section 15b.

The touch panel detection section 15a is constituted by a sheet-like transparent touch switch layered on the surface of the display monitor 14. The touch panel detection section 15a is a detection means different from a physical switch like the input operation section 12 and detects presence/absence of the touch operation with respect to a display screen of the display monitor 14 based on a detection method such as an electrostatic method or a pressure-sensitive method. The touch detection section 15a is constituted by the transparent touch switch, so that the user can visually confirm a video (image), such as a video (image) of a white frame representing the parking space to be described later, displayed on the display monitor 14 through the touch detection section 15a.

The touch control section 15b is interposed between the touch detection section 15a and controller 18. The touch control section 15b calculates a touched position based on a signal (signal generated based on the touch operation) detected by the touch detection section 15a and outputs the calculated touched position to the controller 18.

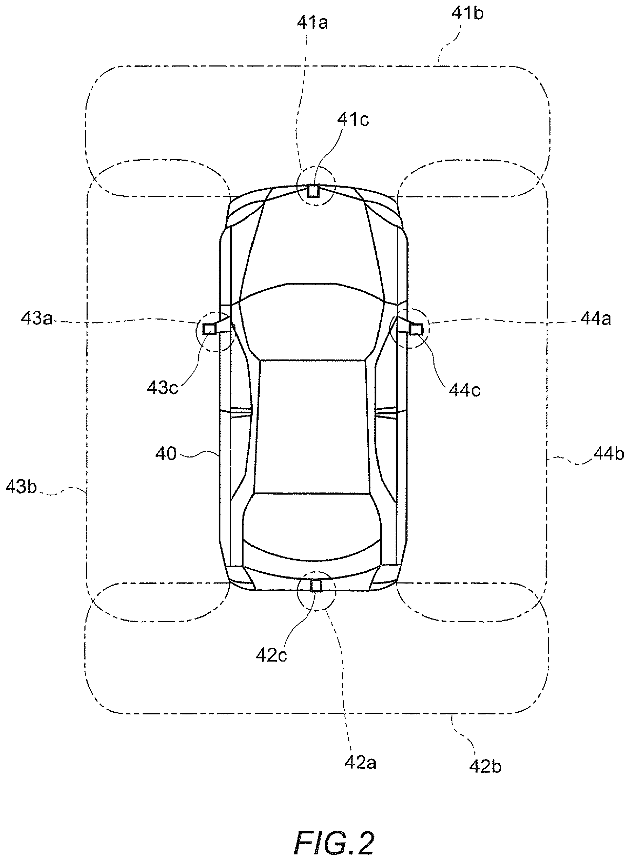

The cameras 21 each have a role of shooting conditions surrounding the vehicle. As illustrated in FIG. 2, in the car navigation system 1 according to the present embodiment, there are mounted four cameras: a front camera 41c disposed at a front portion 41a (e.g., a front bumper, or a front grill) of a vehicle 40 and shoots a front range 41b of the vehicle 40; a rear camera 42c disposed at a rear portion 42a (e.g., a rear bumper, or near a rear window) of the vehicle 40 and shoots a rear range 42b of the vehicle 40; a left side camera 43c disposed at a left side portion 43a (e.g., near a left side door mirror, or near a left side pillar position) of the vehicle 40 and shoots a left side range 43b of the vehicle 40; and a right side camera 44c disposed at a right side portion 44a (e.g., near a right side door mirror, or near a right side pillar position) of the vehicle 40 and shoots a right side range 44b of the vehicle 40.

The video shot by each of the cameras 41c to 44c is used for generation processing of the overhead view video to be performed in the controller 18. Details of the overhead view video generation processing to be performed in the controller 18 will be described later. Although the four cameras 41c to 44c are mounted to the vehicle 40 in the car navigation system 1 according to the present embodiment as illustrated in FIG. 2, the number of the cameras to be mounted to the vehicle 40 is not limited to four, but any number of cameras may be mounted as long as the conditions of the entire area surrounding the vehicle 40 can be covered. For example, the number of the cameras 21 may be three or less, or, five or more. Mounting positions of the cameras 21 are not limited to the positions illustrated in FIG. 2 as long as the conditions of the entire area surrounding the vehicle 40 can be covered.

The map data recording section 16 is constituted by a common auxiliary storage device, such as a hard disk, an SSD (Solid State Drive), a DVD-ROM, a CD-ROM, or an SD card, that can record therein the map data. The map data includes map display data, route search data, etc. The map display data and route search data each include road link information and road node information stored in the map data. As the map display data, map data of a plurality of scales from wide area map data to detailed map data are prepared. Using this map display data allows the scale of the displayed map to be changed in response to a user's request.

The map data recording section 16 records therein table data used when the overhead view video is generated based on the video of the vehicle surrounding area shot by the cameras 21 (41c to 44c). The controller 18 extracts, from a plurality of table data recorded in the map data recording section 16, optimum table data based on the vehicle and parking space at a time of the parking operation and uses the extracted table data to perform processing of generating an optimum overhead view video (overhead view image) from the videos of the cameras 21.

The speaker 17 has a role of outputting to the user voice guide for route guidance during navigation and outputting voice guide corresponding to various operations to be performed in the car navigation system 1.

The controller 18 has a role of performing various processing to be performed in the car navigation system 1, including route search to a destination set by the user, image generation processing based on the search route, and voice guide output processing. The controller 18 is constituted by, e.g., a CPU (Central Processing Unit).

The RAM 19 serves as a working area of the controller 18. For example, in the overhead view video generation processing to be described later, the table data recorded in the map data recording section 16 is temporarily recorded in the RAM 19. By reading out the table data recorded in the RAM 19 as needed to perform the overhead view video generation processing, it is possible to suppress a delay in the overhead view video generation processing.

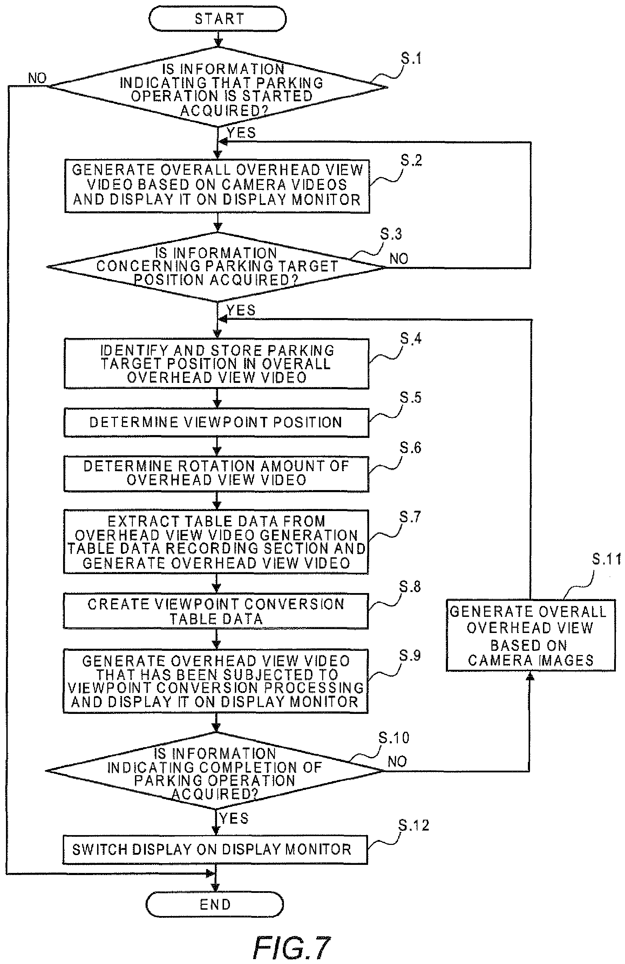

The ROM 20 records therein various programs and the like to be executed in the controller 18. The controller 18 reads out the program from the ROM 20 and executes it, thereby achieving various control processing. For example, the ROM 20 records therein a program for generating the overhead view video (to be described later) as illustrated in FIG. 7.

The controller 18 according to the present embodiment reads out various programs from the ROM 20 and executes them, thereby achieving route guide processing of the car navigation system 1. Further, along with the executed route guide processing, the controller 18 performs processing of generating map information for use in a guidance route and displaying the generated map information on the display monitor 14. Further, according to the program recorded in the ROM 20, the controller 18 performs processing of generating an overhead view video representing the conditions surrounding the vehicle based on the video shot by each of the cameras 41c to 44c and displaying the generated overhead view video on the display monitor 14.

FIG. 3 is a schematic functional diagram illustrating functional sections for achieving the processing of generating the overhead view video and displaying the generated overhead view video on the display monitor 14.

The car navigation system 1 according to the present embodiment is constituted by functional sections (functional blocks) as illustrated in FIG. 3. The car navigation system 1 includes, as the functional blocks, an overhead view video generation section (first overhead view video generation section) 30, an overhead view video generation table data recording section 31, a frame buffer section 32, a parking space extraction section 33, a viewpoint position determination section (parking target position detection section, viewpoint position determination section, rotation amount determination section) 34, a table data creation section 35 for viewpoint-converted video generation (viewpoint conversion table creation section), and a viewpoint-converted video generation section (second overhead view video generation section) 36.

Of the above functional blocks, the overhead view video generation section 30, parking space extraction section 33, viewpoint position determination section 34, table data creation section 35 for viewpoint-converted video generation, and viewpoint-converted video generation section 36 are each allowed to fulfill its role by the controller 18 executing the program recorded in the ROM 20. Thus, the overhead view video generation section 30, parking space extraction section 33, viewpoint position determination section 34, table data creation section 35 for viewpoint-converted video generation, and viewpoint-converted video generation section 36 are realized by processing to be performed in the controller 18 in essence.

The overhead view video generation table data recording section 31 and frame buffer section 32 each correspond to the map data recording section 16 or RAM 19.

The overhead view video generation section 30 has a role of performing generation of the overhead view video (first overhead view video) based on the videos shot by the four cameras 21 (41c, 42c, 43c, and 44c) (specifically, the overhead view video is generated by sequentially generating overhead view images in real time). A specific generation method of the overhead view video is described in detail in Patent Literature 1 (Jpn. Pat. Appln. Laid-Open Publication No. 2001-339716) and Patent Literature 2 (Jpn. Pat. Appln. Laid-Open Publication No. 2007-183877) described above, and explanation thereof is omitted here.

In general, when the overhead view video (overhead view image) is generated using a plurality of cameras, an unnatural boundary portion (joint portion) with an adjacent image (video) may appear at a boundary portion of a shooting range of each camera. Thus, the overhead view video generation section 30 according to the present embodiment adds to the boundary portion an image (video) having no sense of strangeness while adjusting brightness, hue, and the like of the boundary portion, or applies α (alpha) blending to the boundary portion between adjacent images (videos), to thereby prevent the sense of strangeness in the boundary portion from being left.

First, in generating the overhead view video (over head view image), the overhead view video generation section 30 creates an overall overhead view video (overhead view image: first overhead view video) around the vehicle. Then, the overhead view video generation section 30 generates an overhead view video (overhead view image) in which an intermediate point between the vehicle position and parking target position is located at a center of the screen. Specifically, the viewpoint-converted video generation section 36 generates, based on the viewpoint position determined by the viewpoint position determination section 34, an overhead view video (overhead view image) in which the corresponding viewpoint position is located at a center of the video (image). The parking target position corresponds to a parking space defined by a white frame, in general.

The overhead view video generation table data recording section 31 records therein a plurality of types of table data for the overhead view video generation section 30 to generate the overhead view video (overhead view image) in which the viewpoint position determined by the viewpoint position determination section 34 is located at the center of the video (image). The table data is image conversion table data for the overhead view video generation section 30 to generate, after generating the overall overhead view video (overhead view image), the overhead view video (overhead view image) which covers a part of the overall overhead view video (overhead view image) and in which the viewpoint position is located at the center thereof. The use of such table data allows easy generation (image conversion) of the overhead view video (overhead view image) in which the viewpoint position is located at the center thereof to be without need of sophisticated arithmetic processing and allows reduction in a processing load in viewpoint conversion processing to be described later.

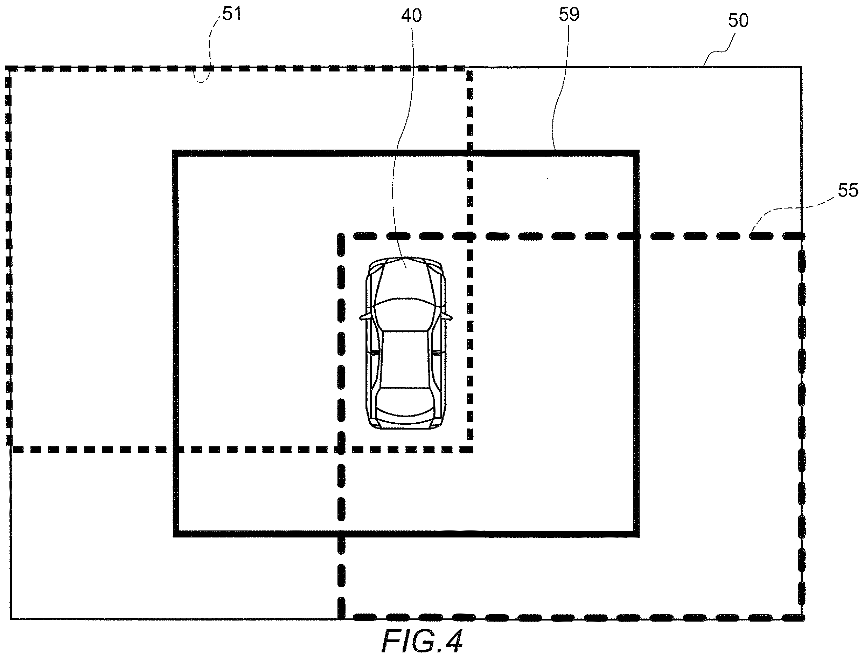

As illustrated in FIG. 4, the overhead view video generation table data recording section 31 according to the present embodiment records therein table data for extracting an overhead view video (overhead view image) 51 covering an upper-left part of an overall overhead view video (overhead view image) 50, table data for extracting an overhead view video (overhead view image) 55 covering an lower-right part thereof, and table data for extracting an overhead view video (overhead view image) 59 covering a center part thereof. Further, although not illustrated, the overhead view video generation table data recording section 31 records therein table data for extracting an overhead view video (overhead view image) covering an upper-center part of the overall overhead view video (overhead view image) 50, table data for extracting an overhead view video (overhead view image) covering an upper-right part thereof, table data for extracting an overhead view video (overhead view image) covering a middle-right part thereof, table data for extracting an overhead view video (overhead view image) covering an lower-center part thereof, table data for extracting an overhead view video (overhead view image) covering an lower-left part thereof, and table data for extracting an overhead view video (overhead view image) covering an middle-left part thereof.

The overhead view video generation section 30 extracts optimum table data from the overhead view video generation table data recording section 31 based on the viewpoint position acquired from the viewpoint position determination section 34 and generates the overhead view video (overhead view image) in which the viewpoint position is located at the center thereof. As described later, the viewpoint position to be acquired from the viewpoint position determination section 34 is set based on an intermediate position between the vehicle 40 and parking target position. Thus, the table data to be selected is determined based on where the parking target position is located with respect to the overall overhead view video (overhead view image) 50.

The overhead view video generation table data recording section 31 corresponds to the above-mentioned map data recording section 16 or RAM 19. Thus, the overhead view video generation table data recording section 31 may be a common auxiliary storage device, such as a hard disk, a flash memory, or an SSD (Solid State Drive). However, it is desirable to use a recording means having a high read speed so as to prevent a delay of processing due to a low table data read speed (bottleneck) in overhead view conversion processing in the overhead view video generation section 30. Although a non-volatile memory may be used as the overhead view video generation table data recording section 31, it is likely that a desired read speed cannot be obtained with the flash memory. Thus, a method can be employed, in which the table data is previously transferred to a volatile memory (e.g., RAM 19) having a high read speed so as to allow the data to be read out therefrom as needed basis.

The frame buffer section 32 is used to temporarily record the overhead view image (overhead view video) that the overhead view video generation section 30 generates based on the table data recorded in the overhead view video generation table data recording section 31. The overhead view image (overhead view video) temporarily recorded in the frame buffer section 32 is used for viewpoint conversion to be performed in the viewpoint-converted video generation section 36 to be described later. The frame buffer section 32 also corresponds to the above-mentioned map data recording section 16 or RAM 19 and is also desirably a recording means having a high read speed.

The parking space extraction section 33 has a role of detecting a parking space as the parking target position based on image analysis applied to the overhead view video (overhead view image) converted by the overhead view video generation section 30. In general, a white line (white frame), etc., is used to define a boundary line between the parking target position and vehicle. Thus, when the white frame as the parking target is painted on an asphalt road, it is possible to automatically detect the parking space within a predetermined range based on density analysis or white line detection applied to the overhead view video (overhead view image). In this case, if a road surface has a bright color (e.g., white) and the boundary defining the parking target position has also a bright color (e.g., yellow), it may be difficult to accurately detect the parking space by the image analysis; however, as described later, determination of the parking target position is made by the touch panel operation, so that no problem occurs in the detection of the parking target position.

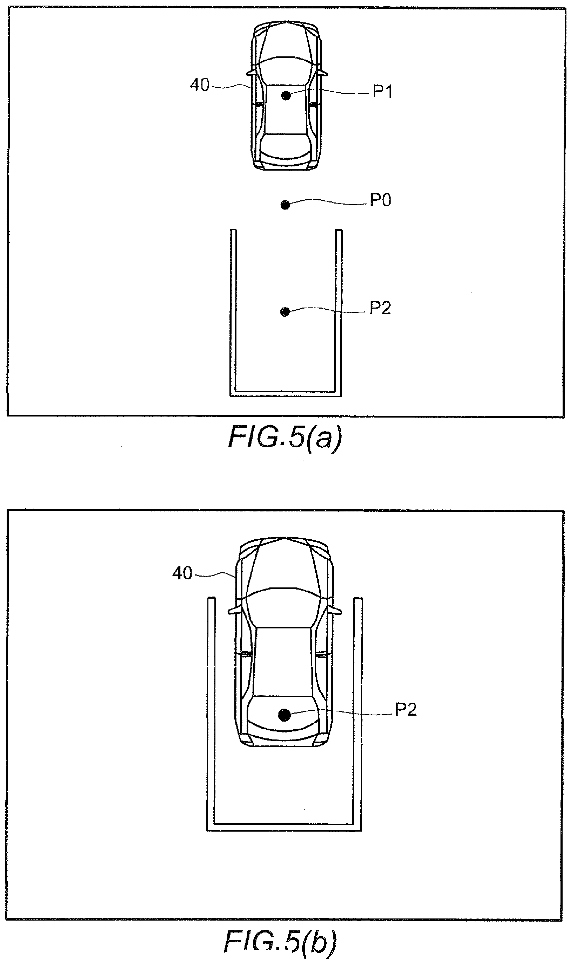

The viewpoint position determination section 34 has a role of determining a viewpoint position for generation of the overhead view video (overhead view image) to be displayed on the display monitor 14. Basically, the viewpoint position is determined in the following two ways. First, in a case where the vehicle 40 is distanced from the parking target position (first condition), for example, in a case where any part of the vehicle 40 has not entered a range (inside of the white frame) of the parking space, an intermediate position (point P0) between a center (point P1) of the vehicle position and a center (center of the parking space: point P2) of the parking target position is determined as the viewpoint position , as illustrated in FIG. 5(a). Second, in a case where a part of the vehicle 40 has entered the range (inside of the white frame) of the parking space (second condition), the center (point P2) of the parking target position is determined as the viewpoint position, as illustrated in FIG. 5(b).

The viewpoint position determination section 34 has another role of determining the rotation amount of the overhead view video (overhead view image). According to the present invention, in the case where the vehicle 40 is distanced from the parking target position (first condition), the viewpoint position determination section 34 determines the rotation amount of the overhead view video (overhead view image) such that the display position of the parking space is located below the vehicle position and that an approach direction side end portion for the vehicle in the parking space is located at an upper side of the screen.

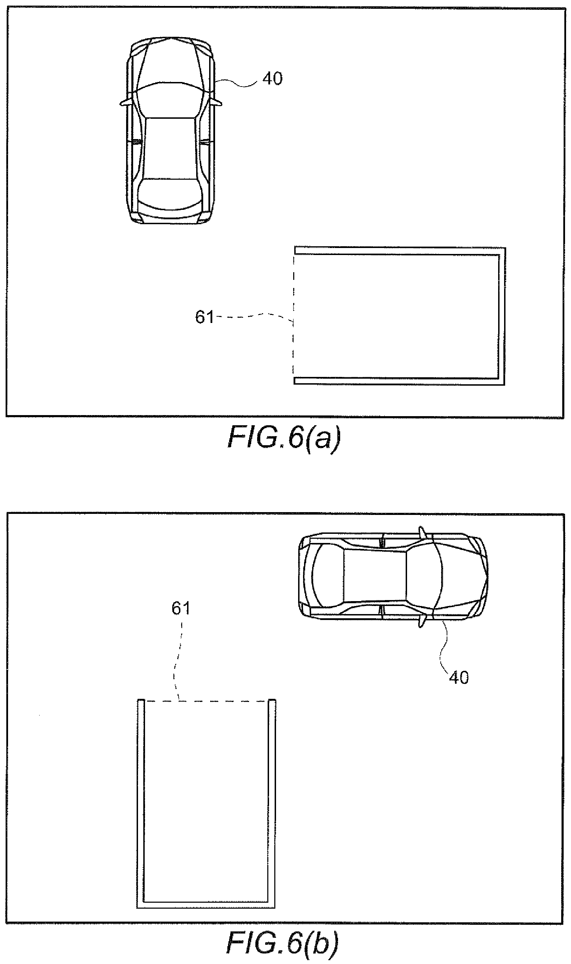

In general, when the vehicle 40 is to be parked in the parking space, the vehicle 40 is often moved backward. Thus, as illustrated in FIG. 6(a), in a case where the parking space for the vehicle 40 is located to the rear right of the vehicle and where an approach direction side end portion 61 for the vehicle 40 is located to the left of the parking space, the overhead view video (overhead view image) is rotated to the right by 90 degrees to adjust horizontal and vertical directions of the overhead view video (overhead view image) such that the parking space is located below the vehicle 40 and that the approach direction side end portion 61 for the vehicle 40 is located at the upper side of the parking space. The rotation amount to be determined by the viewpoint position determination section 34 is determined to be set to an optimum value obtained when the overhead view video (overhead view image) is rotated about the viewpoint position.

The viewpoint position determination section 34 inputs thereto position data of the parking target position detected by the parking space extraction section 33, touch position information input from the touch panel section 15, and vehicle condition information detected by the current position detection section 10. The position data of the parking target position input from the parking space extraction section 33 is data detected based on the above-mentioned image analysis. The touch position information input from the touch panel section 15 is position information detected when the user performs, when starting the parking operation, a touch operation with respect to the parking target position (parking space) in the overhead view video displayed on the display monitor 14. The viewpoint position determination section 34 can calculate a coordinate position of the parking target position in the overhead view video (overhead view image) based on a relationship between the overhead view video displayed on the display monitor 14 and the touched position detected by the touch detection section 15a of the touch panel section 15.

The vehicle condition information detected by the current position detection section 10 corresponds to information such as the vehicle's travel direction, vehicle's travel speed, and vehicle's GPS position detected, respectively, by the vibration gyroscope 10a, vehicle speed sensor 10b, and GPS sensor 10c. The viewpoint position determination section 34 can grasp in which direction of the vehicle faces and whether the vehicle is moving forward or backward based on the vehicle condition information detected by the current position detection section 10, thereby determining in real time an optimum viewpoint position and optimum rotation amount of the overhead view video (overhead view image) depending on the vehicle condition.

The touch position information of the touch panel section 15 and vehicle condition information of the current position detection section 10, which are input to the viewpoint position determination section 34, can be output to the parking space extraction section 33 from the viewpoint position determination section 34. In the parking target position detection processing to be performed by the parking space extraction section 33, by using not only a result of the image analysis but also the touch position information and vehicle condition information to detect the parking space, detection accuracy of the parking target position can be enhanced.

The viewpoint position information determined by the viewpoint position determination section 34 is output to the overhead view video generation section 30 and table data creation section 35 for viewpoint-converted video generation. The overhead view video generation section 30 extracts optimum table data from the overhead view video generation table data recording section 31 based on the received viewpoint position information and generates the overhead view video (overhead view image) conforming with the viewpoint position.

The table data creation section 35 for viewpoint-converted video generation has a role of creating table data for horizontal and vertical movement processing, rotation processing, and scaling processing of the overhead view image (overhead view video) to be recorded in the frame buffer section 32, based on the viewpoint position and rotation amount of the overhead view video (overhead view image) determined by the viewpoint position determination section 34.

The overhead view image (overhead view video) to be recorded in the frame buffer section 32 is the overhead view image (overhead view video) that has been converted in viewpoint by the overhead view video generation section 30 based on the table data extracted from the overhead view video generation table data recording section 31 and that corresponds to the viewpoint position determined by the viewpoint position determination section 34. This overhead view image (overhead view video) has a size previously set based on the table data. Further, the overhead view image (overhead view video) is an image (video) generated based on the camera video shot by the cameras 21, in which a front side of the vehicle is defined to be located at an upper side.

However, the viewpoint position determination section 34 determines not only the viewpoint position but also the horizontal and vertical directions (rotation amount) of the overhead view video (overhead view image). Thus, when the viewpoint conversion of the overhead view image (overhead view video) recorded in the frame buffer section 32 is performed, it is further necessary to set a center of the overhead view image (overhead view video) to the viewpoint position determined by the viewpoint position determination section 34 and determine the horizontal and vertical directions of the overhead view video (overhead view image) based on a relationship between the parking target position and vehicle 40. Further, when the vehicle 40 comes close to the parking space, the overhead view video to be displayed on the display monitor 14 is enlarged such that both the vehicle 40 and parking target position are displayed, which enables effective information to be provided to the user of the vehicle 40.

Thus, the table data creation section 35 for viewpoint-converted video generation creates, based on the viewpoint position information and rotation amount information of the overhead view video (overhead view image) which are obtained from the viewpoint position determination section 34, vehicle position, and parking target position, table data for converting the image (video) recorded in the frame buffer section 32 into an overhead view image (overhead view video) in which the viewpoint position is set to the center of the overhead view image (overhead view video), the approach direction side end portion 61 for the vehicle 40 is located above the parking target position, and both the vehicle 40 and parking target position can adequately be displayed.

The viewpoint conversion of the overhead view video (overhead view image) made by the table data created by the table data creation section 35 for viewpoint-converted video generation is realized by a basic conversion method including enlargement, reduction, horizontal and vertical movement, and rotation to be applied to the overhead view image (overhead view video) recorded in the frame buffer section 32. Thus, processing of creating the table data in the table data creation section 35 for viewpoint-converted video generation is also realized based on conversion elements (enlargement, reduction, horizontal and vertical movement, and rotation) to be applied to the image (video) and can be performed easily based on the information acquired from the viewpoint position determination section 34.

The table data creation section 35 for viewpoint-converted video generation can easily create the table data and thus does not require high processing performance. Thus, even when the table data creation processing is performed in the table data creation section 35 for viewpoint-converted video generation, the overhead view video (overhead view image) generated based on real time videos shot by the cameras 21 can rapidly be viewpoint-converted.

The viewpoint-converted video generation section 36 performs processing of converting, based on the viewpoint conversion table data created by the table data creation section 35 for viewpoint-converted video generation, the overhead view image (overhead view video) recorded in the frame buffer section 32 into an optimum overhead view video (overhead view image: second overhead view video) in which the viewpoint position determined by the viewpoint position determination section 34 is set to the center thereof and the parking target position is located at a lower portion of the overhead view image (overhead view video) displayed on the display monitor 14. The overhead view video (overhead view image) conversion processing in the viewpoint-converted video generation section 36 is video conversion processing based on the table data and can thus realized rapidly and with low load.

The following describes processing to be performed in the controller 18 when the function of each of the above-described functional sections is executed based on the program recorded in the ROM 20. FIG. 7 is a flowchart illustrating an example of overhead view video generation processing to be performed in the controller 18.

The controller 18 determines whether or not it acquires information indicating that the parking operation is started (S. 1). For example, the above determination may be made based on whether or not a select lever is set to a reverse operation position. Alternatively, the above determination may be made based on whether or not the user touches an icon (serving as a parking operation start button, etc.) displayed on the display monitor 14.

When the information indicating that the parking operation is started is not acquired (No in S. 1), the controller 18 ends this routine. After ending the routine, the controller 18 may execute the same routine repeatedly.

When the information indicating that the parking operation is started is acquired (Yes in S. 1), the controller 18 generates the overhead view video (overhead view image: first overhead view video) based on the videos shot by the cameras 21 and displays the generated overhead view video (overhead view image) on the display monitor 14 through the image memory section 13 (S. 2). In this processing, the controller 18 functions as the overhead view video generation section 30 to generate the overhead view video (overhead view image). The overhead view video (overhead view image) generated in S. 2 is the overall overhead view video (overhead view image) in which the vehicle is located at the center thereof. The overhead view video (overhead view image) generated in S. 2 is recorded in the frame buffer section 32 and is then directly displayed on the display monitor 14 without being subjected to the viewpoint conversion processing by the viewpoint-converted video generation section 36.

As described above, an image having no sense of strangeness is added to the boundary portion of the video shot by each of the four cameras 41c, 42c, 43c, and 44c while adjusting brightness, hue, and the like of the boundary portion, or the α (alpha) blending is applied to the boundary portion between adjacent images. That is, the overhead view video (overhead view image) generated in S. 2 is video (image) in which the sense of strangeness in the boundary portion is prevented from being left.

Subsequently, the controller 18 determines, based on the touch position information input from the touch panel section 15, whether or not it acquires information concerning the parking target position (S. 3). When the parking target position information is not acquired (No in S. 3), the controller 18 repeatedly executes the processing (S. 2) of generating the overhead view video (overhead view image: first overhead view video) based on the videos shot by the cameras 21, recording the generated overhead view video in the frame buffer section 32, and displaying the overhead view video (overhead view image) on the display monitor 14 through the image memory section 13.

On the other hand, when the parking target position information is acquired (Yes in S. 3), the controller 18 identifies the parking target position in the overall overhead view video (overhead view image) generated by the four cameras based on the acquired parking target position information and the image processing applied to the overhead view video (overhead view image) and stores the identified parking target position (S. 4). In this processing, the controller 18 functions as the parking space extraction section 33. Thereafter, the viewpoint position is determined based on the parking target position and the vehicle position (center position of the overhead view video (overhead view image)).

Then, the controller 18 determines the viewpoint position based on the parking target position identified in S. 4 and the vehicle position (center position) in the overhead view video (overhead view image) generated in S. 2 (S. 5). In this processing, the controller 18 functions as the viewpoint position determination section 34.

As described above, in the case where the vehicle 40 is distanced from the parking target position (parking space) (first condition), the intermediate position (point P0 in FIG. 5(a)) between the vehicle 40 and parking target position is determined as the viewpoint position. In the case where a part of the vehicle 40 has entered the parking target position (parking space) (second condition), the parking target position (more in detail, the center position (point P2 in FIG. 5(b)) of the parking space) is determined as the viewpoint position. When the vehicle 40 is moved, the controller 18 determines a new viewpoint position that takes into account the vehicle position and parking target position based on the travel direction information, GPS information, vehicle speed information, and the like acquired from the current position detection section 10.

Thereafter, the controller 18 detects the white color portion (white frame) of the parking target position (parking space) identified in S. 4 by the image analysis applied to the overhead view video (overhead view image) and determines the rotation amount of the overhead view video (overhead view image) such that the parking target position in the screen of the display monitor 14 is located below the vehicle and that the approach direction side end portion 61 for the vehicle is located at the upper side of the parking space (S. 6). When the vehicle is moved, the controller 18 determines the rotation amount of the overhead view video (overhead view image) that takes into account the vehicle position and parking target position based on the travel direction, GPS information, vehicle speed information, and the like acquired from the current position detection section 10. Also in this processing, the controller 18 functions as the viewpoint position determination section 34.

Then, the controller 18 extracts optimum table data from the overhead view video generation table data recording section 31 based on the viewpoint position and generates an overhead view video (overhead view image) best conforming with the viewpoint position from the overall overhead view video (overhead view image) generated by the four cameras (S. 7). In this processing, the controller 18 functions as the overhead view video generation section 30. The generated overhead view video (overhead view image) best conforming with the viewpoint position is recorded in the frame buffer section 32 (map data recording section 16 or RAM 19).

The controller 18 then determines a converting range (scaling range) of the overhead view video (overhead view image) in the viewpoint conversion processing based on the parking target position identified in S. 4 and vehicle position and determines a center of the overhead view video (overhead view image) to be generated by the viewpoint conversion processing based on the viewpoint position determined in S. 5, thereby determining the horizontal and vertical movement distance of the overhead view video (overhead view image). Further, the controller 18 determines a rotation direction and a rotation angle of the overhead view video (overhead view image) based on the rotation amount of the overhead view video (overhead view image) determined in S. 6 and creates the viewpoint conversion table data (S. 8). In this processing, the controller 18 functions as the table data creation section 35 for viewpoint-converted video generation.

Then, the controller 18 applies the viewpoint conversion processing to the overhead view image (overhead view video) recorded in the frame buffer section 32 based on the created viewpoint conversion table data to generate an overhead view video (overhead view image: second overhead view video) in which the viewpoint position is set to the center thereof, the vehicle 40 and parking target position are displayed in a balanced manner, and the parking target position is located below the position of the vehicle 40 and displays the generated overhead view video (overhead view image) on the display monitor 14 through the image memory section 13 (S. 9).

Displaying the overhead view video that has been subjected to the viewpoint conversion processing on the display monitor 14 allows presentation of conditions surrounding the vehicle to the user who performs the parking operation. In particular, the overhead view video displayed on the display monitor 14 has been subjected to the processing of S. 2, by which the sense of strangeness in the boundary portion is prevented from being left therein. Thus, the viewpoint-converted overhead view video generated based on the overhead view video (overhead view image) having no sense of strangeness in the boundary portion has also no sense of strangeness in the boundary portion, allowing presentation of the overhead view video having no sense of strangeness.

Thereafter, the controller 18 determines whether or not it acquires information indicating completion of the parking operation (S. 10). For example, the above determination may be made based on whether or not a select lever is moved from a reverse operation position to a parking operation position. Alternatively, the above determination may be made based on whether or not the user touches an icon (serving as a parking operation end button, etc.) displayed on the display monitor 14.

When the information indicating completion of the parking operation is not acquired (No in S. 10), the controller 18 generates the overall overhead view video (overhead view image) based on the camera videos shot by the four cameras (S. 11) and shifts to S. 4 where it starts to execute the above processing repeatedly.

By the repetitive execution of the processing, processing of generating the overall overhead view video (overhead view image) based on the four cameras 21 (S. 11), determining the viewpoint position (S. 5), generating the overhead view video (overhead view image) best conforming with the determined viewpoint position (S. 7), and outputting the overhead view video (overhead view image) that has been subjected to the viewpoint conversion processing based on the generated overhead view video (overhead view image) to the display monitor 14 (S. 9) are performed in a repetitive manner, thereby allowing real time generation/display of the overhead view video surrounding the vehicle.

In particular, the controller 18 according to the present embodiment performs the viewpoint conversion processing (processing in the viewpoint-converted video generation section 36) based on the viewpoint conversion table data (viewpoint conversion table data created in the table data creation section 35 for viewpoint-converted video generation), thereby allowing reduction in a processing load on the controller 18 when it performs the viewpoint conversion processing and allowing speed-up of processing to be easily achieved.

On the other hand, when the information indicating completion of the parking operation is acquired (Yes in S. 10), the controller 18 changes the image displayed on the display monitor 14 to a route guide display or the like in the car navigation system 1 (S. 12) and ends this routine.

As described above, in the car navigation system 1 according to the present embodiment, video conversion based on the table data recorded in the overhead view video generation table data recording section 31 and viewpoint conversion table data created in the table data creation section 35 for viewpoint-converted video generation is applied to the overall overhead view video (overhead view image: first overhead view video), as a base video, generated in real time based on the four camera videos, whereby the optimum overhead view video (second overhead view video) can be generated. Thus, it is possible to present to the user the viewpoint-converted overhead view video that reflects in real time the current surrounding conditions.

For example, even when the conditions surrounding the vehicle changes from moment to moment, for example, when someone comes close to the surrounding area of the vehicle, it is possible to present a surrounding overhead view video that reflects the corresponding conditions.

Further, the viewpoint conversion processing is performed based on the table data, thereby making it possible to reduce a processing load on the controller 18 when it performs the video conversion processing (image conversion processing) and to achieve speed-up of processing.

Further, application of the processing to the boundary portion of the overall overhead view video (overhead view image) generated based on the videos of the four cameras eliminates the need to apply the processing once again to the boundary portion even when the viewpoint conversion is performed afterward based on the table data. Thus, it is possible to present the overhead view video (overhead view image) having no sense of strangeness in the boundary portion without additional boundary image processing by the controller 18.

Although the preferable embodiments of the present invention are explained by referring to the attached drawings, the scope of the present invention should not be interpreted to limit to the explained embodiments. A person skilled in the art can give thought to various alternative implementations and modified implementations within the scope of the claims and those implementations naturally fall within the scope to the present invention.

For example, in the car navigation system 1 according to the present embodiment, the viewpoint conversion table data required for the viewpoint-converted video generation section 36 to perform the viewpoint conversion processing is created in the table data creation section 35 for viewpoint-converted video generation. As described in the embodiment, the viewpoint conversion table data is created based on the horizontal and vertical movement and rotation processing, so that when the viewpoint conversion table data is created in the table data creation section 35 for viewpoint-converted video generation (controller 18), a processing load to be applied thereon is low.

However, instead of creating the viewpoint conversion table data in the above manner, it is possible to previously prepare a large number of viewpoint conversion table data and record them in a recording means (viewpoint conversion table recording section, e.g., the map data recording section 16 or RAM 19 according to the present embodiment). In this case, the viewpoint-converted video generation section 36 or viewpoint position determination section 34 selects the optimum viewpoint conversion table data based on the viewpoint position information or information concerning the rotation amount of the overhead view video (overhead view image), and the viewpoint-converted video generation section 36 applies the viewpoint conversion processing to the overhead view video (overhead view image) recorded in the frame buffer section 32.

Further, in the car navigation system 1 according to the present embodiment, the controller 18 functions, based on the program, as the functional sections, including the overhead view video generation section 30, parking space extraction section 33, viewpoint position determination section 34, table data creation section 35 for viewpoint-converted video generation, and viewpoint-converted video generation section 36. However, the present embodiment is not limited to a configuration in which a single controller 18 is provided in the car navigation system 1. For example, in a configuration in which a plurality of controllers are provided, the controllers may divide their responsibility to fulfill the functions of the functional sections. Further, a configuration may be possible, in which the controllers are provided in one-to-one correspondence with the functional sections so as to allow each function to be executed by the corresponding controller.

Further, in the car navigation system 1 according to the present embodiment, the viewpoint-converted video generation section 36 applies scaling (enlargement/reduction) to the overhead view video (overhead view image) recorded in the frame buffer section 32. However, the overhead view video (overhead view image) does not always require the scaling. The viewpoint-converted video generation section 36 may generate the overhead view video (overhead view image) by performing only the horizontal and vertical movement and rotation processing as the view point conversion processing.

Further, in the car navigation system 1 according to the present embodiment, the viewpoint-converted video generation section 36 performs the viewpoint conversion processing such that the parking target position (parking space) is located below the vehicle 40. However, the parking target position (parking space) need not always be below the vehicle 40. For example, when the vehicle 40 is moved forward toward the parking target position (parking space), the parking target position (parking space) is located above the vehicle 40, which is advantageous to provide the user the overhead view video (overhead view image) having no sense of strangeness. Thus, it is possible to determine not to perform subsequent viewpoint conversion processing based on the rotation of the overhead view video (overhead view image) by, for example, touching the parking target position (parking space) through the touch panel operation.

### Reference Sings List

1: car navigation system (parking assistance system)
10: current position detection section
13: image memory section
14: display monitor (display section)
15: touch panel section (input section)
16: map data recording section (viewpoint conversion table recording section)
18: controller (first overhead view video generation section, parking target position detection section, viewpoint position determination section, rotation amount determination section, viewpoint conversion table creation section, second overhead view video generation section)
19: RAM (viewpoint conversion table recording section)
20: ROM
21: camera
30: overhead view video generation section (first overhead view video generation section)
31: overhead view video generation table data recording section
32: frame buffer section
33: parking space extraction section
34: viewpoint position determination section (parking target position detection section, viewpoint position determination section, rotation amount determination section)
35: table data creation section for viewpoint-converted video generation (viewpoint conversion table creation section)
36: viewpoint-converted video generation section (second overhead view video generation section)
50, 51, 55, 59: overhead view image
61: approach direction side end portion
P1: center of vehicle position
P2: center of parking target position
P0: intermediate position

## Claims

1. A parking assistance system comprising:
a first overhead view video generation section (18) that generates, based on camera videos shot by a plurality of cameras mounted to a vehicle, a first overhead view video virtually overlooking, from above the vehicle, conditions surrounding the vehicle with the vehicle located at a center therein;
a parking target position detection section (18) that detects a parking target position for parking the vehicle from the first overhead view video;
a viewpoint position determination section (18) that determines a viewpoint position based on a positional relationship between the parking target position detected by the parking target position detection section and a vehicle position in the first overhead view video;
a rotation amount determination section (18) that determines a rotation amount in the first overhead view video based on the positional relationship between the parking target position and vehicle position in the first overhead view video;
a viewpoint conversion table recording section (16) that records therein a plurality of viewpoint conversion tables for moving a center position of the first overhead view video to the viewpoint position and rotating the first overhead view video with respect to the viewpoint position as a rotation center by the rotation amount; and
a second overhead view video generation section (18) that extracts, from the view point conversion tables recorded in the view point conversion table recording section (16), a viewpoint conversion table for moving a center position of the first overhead view video to the viewpoint position determined by the viewpoint position determination section and rotating the first overhead view video by the rotation amount determined by the rotation amount determination section and applies video conversion processing to the first overhead view video based on the extracted viewpoint conversion table to generate a second overhead view video and outputs the second overhead view video to a display section (14),
wherein the rotation amount determination section (18) determines, as the rotation amount, a rotation angle of the first overhead view video such that the parking target position is located below the vehicle position.

2. The parking assistance system according to claim 1, wherein
the viewpoint position determination section (18) determines an intermediate position between the parking target position and vehicle position in the first overhead view video as the viewpoint position.

3. The parking assistance system according to claim 1, wherein the display section (14) can display the first overhead view video, and the parking assistance system further comprising an input section (15) for a user to identify the parking target position in the first overhead view video displayed on the display section (14), the parking target position detection section (18) detecting the parking target position in the first overhead view video based on the parking target position that the user identifies through the input section (15).

## Patentansprüche

1. Parkhilfesystem mit:
einem ersten Überkopfansichtsvideo-Erzeugungsabschnitt (18), der basierend auf Kameravideos, die von einer Mehrzahl von Kameras, die an einem Fahrzeug montiert sind, aufgenommen sind, ein erstes Überkopfansichtsvideo erzeugt, das von oberhalb des Fahrzeugs aus Bedingungen, die das Fahrzeug umgeben, wobei sich das Fahrzeug in einem Zentrum davon befindet, virtuell überblickt;
einem Parkzielpositionsdetektionsabschnitt (18), der eine Parkzielposition zum Parken des Fahrzeugs aus dem ersten Überkopfansichtsvideo detektiert;
einem Betrachtungspunktpositionsbestimmungsabschnitt (18), der eine Betrachtungspunktposition basierend auf einer Positionsbeziehung zwischen der Parkzielposition, die von dem Parkzielpositionsdetektionsabschnitt detektiert worden ist, und einer Fahrzeugposition in dem ersten Überkopfansichtsvideo bestimmt;
einem Drehgrößenbestimmungsabschnitt (18), der eine Drehgröße in dem ersten Überkopfansichtsvideo bestimmt basierend auf der Positionsbeziehung zwischen der Parkzielposition und der Fahrzeugposition in dem ersten Überkopfansichtsvideo;
einem Betrachtungspunktumwandlungstabellen-Speicherabschnitt (16), der eine Mehrzahl von Betrachtungsumwandlungstabellen speichert zur Bewegung einer Zentrumsposition des ersten Überkopfansichtsvideos zu der Betrachtungspunktposition und zum Drehen des ersten Überkopfansichtsvideos bezüglich der Betrachtungspunktposition um die Drehgröße; und
einem zweiten Überkopfansichtsvideo-Erzeugungsabschnitt (18), der aus den Betrachtungsumwandlungstabellen, die in dem Betrachtungspunktumwandlungstabellen-Speicherabschnitt (16) gespeichert sind, eine Betrachtungspunktumwandlungstabelle extrahiert zur Bewegung einer Zentrumsposition des ersten Überkopfansichtsvideos zu der Betrachtungspunktposition, die von dem Betrachtungspunktpositionsbestimmungsabschnitt bestimmt worden ist, und zum Drehen des ersten Überkopfansichtsvideos um die Drehgröße, die von dem Drehgrößenbestimmungsabschnitt bestimmt worden ist, und Anwenden einer Videoumwandlungsverarbeitung auf das erste Überkopfansichtsvideo basierend auf der extrahierten Betrachtungspunktumwandlungstabelle, um ein zweites Überkopfansichtsvideo zu erzeugen und das zweite Überkopfansichtsvideo an den Anzeigeabschnitt (14) auszugeben,
wobei der Drehgrößenbestimmungsabschnitt (18) einen Drehwinkel des ersten Überkopfansichtsvideos als die Drehgröße derart bestimmt, dass die Parkzielposition sich unterhalb der Fahrzeugposition befindet.

2. Parkhilfesystem nach Anspruch 1, bei dem
der Betrachtungspunktpositionsbestimmungsabschnitt (18) eine Zwischenposition bestimmt zwischen der Parkzielposition und der Fahrzeugposition in dem ersten Überkopfansichtsvideo als die Betrachtungspunktposition.

3. Parkhilfesystem nach Anspruch 1, bei dem der Anzeigeabschnitt (14) das erste Überkopfansichtsvideo anzeigen kann, und das Parkhilfesystem ferner einen Eingabeabschnitt (15) für einen Benutzer aufweist zum Identifizieren der Parkzielposition in dem ersten Überkopfansichtsvideo, das auf dem Anzeigeabschnitt (14) angezeigt wird, wobei der Parkzielpositionsdetektionsabschnitt (18) die Parkzielposition in dem ersten Überkopfansichtsvideo detektiert basierend auf der Parkzielposition, die der Benutzer durch den Benutzerabschnitt (15) angibt.

## Revendications

1. Système d'aide au stationnement comprenant :
une première section de génération de vidéo de vue de dessus (18) qui génère, sur la base de vidéos de caméra prises par une pluralité de caméras montées sur un véhicule, une première vidéo de vue de dessus surplombant virtuellement, d'au-dessus du véhicule, les conditions entourant le véhicule, le véhicule se situant au centre de celle-ci ;
une section de détection de position cible de stationnement (18) qui détecte une position cible de stationnement pour faire stationner le véhicule à partir de la première vidéo de vue de dessus ;
une section de détermination de position de point de vue (18) qui détermine une position de point de vue sur la base d'une relation positionnelle entre la position cible de stationnement détectée par la section de détection de position cible de stationnement et une position de véhicule dans la première vidéo de vue de dessus ;
une section de détermination de quantité de rotation (18) qui détermine une quantité de rotation dans la première vidéo de vue de dessus sur la base de la relation positionnelle entre la position cible de stationnement et la position de véhicule dans la première vidéo de vue de dessus ;
une section d'enregistrement de tableau de conversion de point de vue (16) qui y enregistre une pluralité de tableaux de conversion de point de vue pour déplacer une position centrale de la première vidéo de vue de dessus jusqu'à la position de point de vue et pour faire tourner la première vidéo de vue de dessus par rapport à la position de point de vue comme centre de rotation par la quantité de rotation ; et
une seconde section de génération de vidéo de vue de dessus (18) qui extrait, des tableaux de conversion de point de vue enregistrés dans la section d'enregistrement de tableau de conversion de point de vue (16), un tableau de conversion de point de vue pour déplacer une position centrale de la première vidéo de vue de dessus jusqu'à la position de point de vue déterminée par la section de détermination de position de point de vue et pour faire tourner la première vidéo de vue de dessus de la quantité de rotation déterminée par la section de détermination de quantité de rotation et applique un traitement de conversion vidéo à la première vidéo de vue de dessus sur la base du tableau de conversion de point de vue extrait afin de générer une seconde vidéo de vue de dessus et délivre en sortie la seconde vidéo de vue de dessus sur une section d'affichage (14),
dans lequel la section de détermination de quantité de rotation (18) détermine, en tant que quantité de rotation, un angle de rotation de la première vidéo de vue de dessus de telle sorte que la position cible de stationnement se situe sous la position de véhicule.

2. Système d'aide au stationnement selon la revendication 1, dans lequel
la section de détermination de position de point de vue (18) détermine une position intermédiaire entre la position cible de stationnement et la position de véhicule dans la première vidéo de vue de dessus en tant que position de point de vue.

3. Système d'aide au stationnement selon la revendication 1, dans lequel la section d'affichage (14) peut afficher la première vidéo de vue de dessus, et le système d'aide au stationnement comprenant en outre une section d'entrée (15) pour qu'un utilisateur identifie la position cible de stationnement dans la première vidéo de vue de dessus affichée sur la section d'affichage (14), la section de détection de position cible de stationnement (18) détectant la position cible de stationnement dans la première vidéo de vue de dessus sur la base de la position cible de stationnement que l'utilisateur identifie par le biais de la section d'entrée (15).
